# EUROPEAN PATENT APPLICATION

(11) **EP 4 129 445 A1**
(43) Date of publication of application: **08.02.2023**
(21) Application number: 21776754.0
(22) Date of filing: 15.03.2021
(51) Int. Cl.: B01D 43/00, B30B 9/16, C02F 11/121

(54) **SEPARATION APPARATUS**

(30) Priority: 24.03.2020 JP 2020053417
(71) Applicant: Metawater Co., Ltd., Tokyo 101-0041 (JP)
(72) Inventor: ANDO, Yoshinori, Tokyo 101-0041 (JP); INOUE, Satoshi, Tokyo 101-0041 (JP)
(74) Representative: TBK
(86) International application number: PCT/JP2021/010458
(87) International publication number: WO 2021/193210

(57) **Abstract**

Appropriately perform solid-liquid separation. A separation device (1) includes a casing (10), a screw shaft (12), a first screw blade (14), and a second screw blade (16). At least one of the first screw blade (14) and the second screw blade (16) has an opening that penetrates from one surface to another surface, designed based on the outflow of separated liquid (C) and solids from the screw blade.

## Description

### Field

The present invention relates to a separation device.

### Background

As described in Patent Literature 1, a separation device that conveys and squeezes sludge, by rotating a screw provided with two screw blades has been known. In the separation device, a first space and a second space interposed between the two screw blades are formed inside a casing the side surface of which is provided with a sludge feeding port. In the separation device, raw sludge is dehydrated in the first space, and is discharged, and the separated liquid produced by dehydration is made to flow into the second space from the first space via a gap between the outer periphery of the screw blade and the inner periphery of the casing, and is discharged.

### Citation List

### Patent Literature

Patent Literature 1: WO2015/186612

### Summary

### Technical Problem

In this manner, the separation device in Patent Literature 1 can increase solid-liquid separation efficiency, by performing solid-liquid separation using a gap. In such a separation device, it is more preferable to further increase the solid-liquid separation efficiency.

The present invention has been made in view of the above, and an object of the present invention is to provide a separation device that can further increase the solid-liquid separation efficiency.

### Solution to Problem

To solve the problem and achieve the object above, a separation device of the present invention comprises: a casing including an object discharging port provided on one end part side and configured to discharge an object having been dehydrated, and a separated liquid discharging port provided on another end part side and configured to discharge separated liquid; a screw shaft provided inside the casing and extending in an extending direction that is a direction from the one end part toward the other end part; a first screw blade extending spirally on an outer peripheral surface of the screw shaft; and a second screw blade extending spirally on the outer peripheral surface of the screw shaft such that a predetermined gap is formed with respect to the first screw blade in the extending direction, wherein at least one of the first screw blade and the second screw blade has an opening that penetrates from one surface to another surface, designed based on outflow of separated liquid and a solid from each screw blade.

### Advantageous Effects of Invention

According to the present invention, it is possible to further increase the solid-liquid separation efficiency.

### Brief Description of Drawings

FIG. 1 is a partial sectional view of a separation device according to a first embodiment.
FIG. 2 is a schematic sectional view of a screw blade according to the first embodiment.
FIG. 3 is a schematic diagram illustrating an example of openings.
FIG. 4 is a schematic diagram illustrating another example of openings.
FIG. 5 is a schematic sectional view of a screw blade according to a second embodiment.
FIG. 6 is a schematic sectional view of a screw blade according to a third embodiment.

### Description of Embodiments

Hereinafter, a preferred embodiment of the present invention will be described in detail with reference to the accompanying drawings. However, the present invention is not limited to the embodiment described below.

### First Embodiment

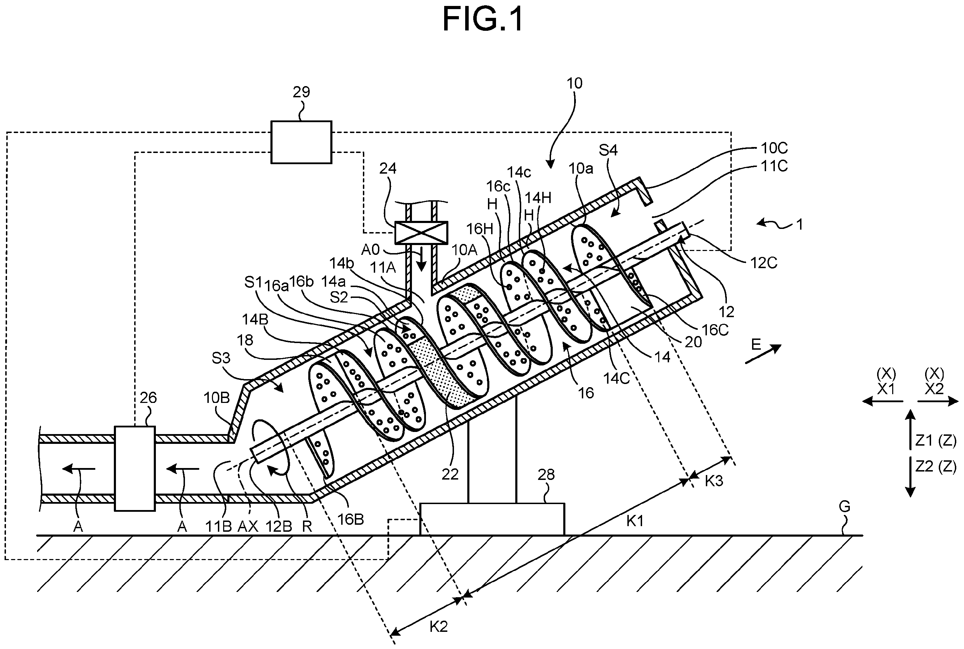

FIG. 1 is a partial sectional view of a separation device according to a first embodiment. As illustrated in FIG. 1, a separation device 1 according to the present embodiment is a screw-type separation device, and includes a casing 10, a screw shaft 12, a first screw blade 14, a second screw blade 16, a first partition wall part 18, a second partition wall part 20, a cover part 22, a feeding unit 24, a discharge pump 26, an inclination adjusting unit 28, and a control unit 29. The separation device 1 dehydrates a pre-object A0 fed into the casing 10 from an object feeding port 11A, which will be described below, and discharges a concentrated object A having been dehydrated from an object discharging port 11B, which will be described below. Then, the separation device 1 discharges separated liquid C, which is separated from the pre-object A0 by dehydration, from a separated liquid discharging port 11C, which will be described below. The pre-object A0 is an object before being dehydrated by the separation device 1, and in the present embodiment, is sludge such as sewage and industrial liquid waste with high water content. The pre-object A0 may be a flocculated solid component to which a flocculant is added, or may be sludge to which a flocculant is not added and that is not flocculated.

Hereinafter, a direction parallel to a ground surface G, that is, a horizontal direction, is referred to as a direction X. One direction in the direction X is referred to as a direction X1, and the other direction in the direction X, that is, a direction opposite to the direction X1 is referred to as a direction X2. Moreover, a direction orthogonal to the ground surface G, that is, a vertical direction, is referred to as a direction Z. Then, one direction in the direction Z, that is, an upward direction in the vertical direction is referred to as a direction Z1, and the other direction in the direction Z, that is, a downward direction in the vertical direction is referred to as a direction Z2.

The casing 10 is a tubular member that extends from one end part 10B to another end part 10C in an extending direction E, that is, an axial direction, and in which space is formed. The extending direction E is a direction from the end part 10B side toward the end part 10C side (direction X2 side), and is inclined to the direction Z1 side with respect to the direction X2, from the end part 10B side toward the end part 10C side. Thus, the end part 10B of the casing 10 is placed at the direction Z2 side than the end part 10C.

In the casing 10, the object feeding port 11A is opened on the side surface (outer peripheral surface) of a middle part 10A, the object discharging port 11B is opened on the end part 10B, and the separated liquid discharging port 11C is opened on the end part 10C. The middle part 10A (object feeding port 11A) is a part between the end part 10B (object discharging port 11B) and the end part 10C (separated liquid discharging port 11C) in the extending direction E of the casing 10. The middle part 10A is placed on the center of the casing 10 in the extending direction E, but may also be placed on any position between the end part 10B and the end part 10C in the extending direction E. The object feeding port 11A is not limited to be provided on the side surface of the casing 10. For example, the object feeding port 11A may be formed on the screw shaft 12. In this case, for example, the object feeding port 11A is opened on the outer peripheral surface of the screw shaft 12 in a first space S1, which will be described below, and a flow passage to which the pre-object A0 is supplied from the outside of the separation device 1 and that communicates with the object feeding port 11A is formed inside the screw shaft 12.

Beside the object feeding port 11A, the object discharging port 11B, and the separated liquid discharging port 11C, a hole that communicates the inside with the outside is not formed in the casing 10, but an opening may also be formed in the casing 10 in addition to the object feeding port 11A, the object discharging port 11B, and the separated liquid discharging port 11C. However, unlike a screen such as a mesh and punched plate, a large number of openings are not formed over the entire range of the casing 10.

The screw shaft 12 is formed in a cylindrical shape, is provided inside the casing 10, and extends in the extending direction E. In the screw shaft 12, at least one end part 12B or the other end part 12C is coupled to a motor, which is axially supported by a bearing (neither is not illustrated). When the motor is driven by the control unit 29, the screw shaft 12 is rotated in a rotation direction R with the extending direction E as an axial center. In the present embodiment, when viewed from the end part 12C side, the rotation direction R is a counterclockwise direction. However, it is not limited thereto.

The first screw blade 14 is provided so as to extend spirally on the outer peripheral surface of the screw shaft 12 in the casing 10, from one end part 14B to another end part 14C. The end part 14B is an end part on the object discharging port 11B side, and is placed on the object discharging port 11B side than the object feeding port 11A. The end part 14C is an end part on the separated liquid discharging port 11C side, and is placed on the separated liquid discharging port 11C side than the object feeding port 11A. The first screw blade 14 has a first surface 14a, which is a surface directed to the object discharging port 11B side, and a second surface 14b, which is a surface directed to the separated liquid discharging port 11C side. A virtual straight line that penetrates through the first screw blade 14 in the extending direction E alternately intersects the first surface 14a and the second surface 14b, as the virtual straight line extends in the extending direction E.

The first screw blade 14 is wound in a direction opposite to the rotation direction R, from the end part 14C toward the end part 14B. That is, when the rotation direction R is a counterclockwise direction when viewed from the end part 12C side, the first screw blade 14 is provided in what is called a Z-winding (right hand) spiral. Alternatively, when the rotation direction R is a clockwise direction when viewed from the end part 12C side, the first screw blade 14 is provided in what is called an S-winding (left hand) spiral. The first screw blade 14 is rotated with the rotation of the screw shaft 12.

An outer peripheral part 14c of the first screw blade 14 does not come into contact with an inner peripheral surface 10a of the casing 10, and a gap H is formed between the outer peripheral part 14c and the inner peripheral surface 10a. The gap H is a minute clearance, has a size capable that keeps at least a part of the concentrated object A from passing therethrough (or blocks the concentrated object A), and is large enough so that a liquid component such as the separated liquid C can pass therethrough. For example, the gap H is a clearance of about 1 mm or more and 2 mm or less.

The first screw blade 14 has an opening 14H that penetrates from the first surface 14a to the second surface 14b, which is a surface on the opposite side of the first surface 14a. In the present embodiment, the opening 14H has a circular shape, and a plurality of the openings 14H are formed over the entire range of the first screw blade 14. The opening 14H has a size that keeps at least a part of the concentrated object A from passing therethrough (or blocks the concentrated object A), and is large enough so that a liquid component such as the separated liquid C can pass therethrough. For example, the diameter of the opening 14H may be about 1 mm or more and 2 mm or less. The diameter in this example refers to the diameter if the opening 14H has a circular shape, but if the opening 14H does not have a circular shape, for example, the diameter may be a diameter of the inscribed circle of the opening 14H.

In the casing 10, the second screw blade 16 extends spirally on the outer peripheral surface of the screw shaft 12 in the extending direction E. The second screw blade 16 is provided on a position shifted from the first screw blade 14 such that a predetermined gap is formed with respect to the first screw blade 14 in the extending direction E, and is wound in the same winding direction as that of the first screw blade 14. The second screw blade 16 is also rotated with the rotation of the screw shaft 12. The second screw blade 16 includes a first surface 16a, which is a surface directed to the object discharging port 11B side, and a second surface 16b, which is a surface directed to the separated liquid discharging port 11C side. A virtual straight line that penetrates through the second screw blade 16 in the extending direction E alternately intersects the first surface 16a and the second surface 16b, as the virtual straight line extends in the extending direction E.

The second screw blade 16 extends spirally from one end part 16B to another end part 16C. The end part 16B is an end part on the object discharging port 11B side, and is placed on the object discharging port 11B side than the object feeding port 11A. The end part 16C is an end part on the separated liquid discharging port 11C side, and is placed on the separated liquid discharging port 11C side than the object feeding port 11A. In the example of FIG. 1, the end part 16B is on the object discharging port 11B side than the end part 14B of the first screw blade 14 in the extending direction E. The end part 16C is on the separated liquid discharging port 11C side than the end part 14C of the first screw blade 14 in the extending direction E. However, the positional relationship between the end parts 16B and 16C and the end parts 14B and 14C of the first screw blade 14 is not limited to the above description and is optional.

An outer peripheral part 16c of the second screw blade 16 does not come into contact with the inner peripheral surface 10a of the casing 10, and the gap H is formed between the outer peripheral part 16c and the inner peripheral surface 10a.

The second screw blade 16 has an opening 16H that penetrates from the first surface 16a to the second surface 16b, which is a surface on the opposite side of the first surface 16a. In the present embodiment, the opening 16H has a circular shape, and a plurality of the openings 16H are formed over the entire range of the second screw blade 16. The opening 16H has a size that keeps at least a part of the concentrated object A from passing therethrough (or blocks the concentrated object A), and is large enough so that a liquid component such as the separated liquid C can pass therethrough. For example, the diameter of the opening 16H may be about 1 mm or more and 2 mm or less. Although described in detail below, the opening 16H is designed with a different concept from that of the opening 14H on the first screw blade 14.

Because the first screw blade 14 and the second screw blade 16 are provided on the positions as described above, the first screw blade 14 and the second screw blade 16 are both provided in a section from the end part 14B to the end part 14C of the first screw blade 14 (hereinafter, this section will be referred to as a conveyance acceleration section K1). Moreover, the second screw blade 16 is provided but the first screw blade 14 is not provided in a section from the end part 16B of the second screw blade 16 to the end part 14B of the first screw blade 14 (hereinafter, this section will be referred to as an object conveyance section K2). Furthermore, the second screw blade 16 is provided but the first screw blade 14 is not provided in a section from the end part 16C of the second screw blade 16 to the end part 14C of the first screw blade 14 (hereinafter, this section will be referred to as a separated liquid conveyance section K3).

The conveyance acceleration section K1 is a double screw section in which the first screw blade 14 and the second screw blade 16 are provided. When viewed from the radial direction of the center axis AX, at least a part of the section of the conveyance acceleration section K1 is set so as to overlap with the object feeding port 11A. In the conveyance acceleration section K1, the first space S1 in which the pre-object A0 and the concentrated object A are conveyed, and a second space S2 in which the separated liquid C is conveyed are formed. The first space S1 is formed between the first surface 16a of the second screw blade 16 and the second surface 14b of the first screw blade 14 that faces the first surface 16a. The first surface 16a faces the separated liquid discharging port 11C side of the first space S1, and the second surface 14b faces the object discharging port 11B side of the first space S1. The second space S2 is formed between the second surface 16b of the second screw blade 16 and the first surface 14a of the first screw blade 14 that faces the second surface 16b. The second surface 16b faces the object discharging port 11B side of the second space S2, and the first surface 14a faces the separated liquid discharging port 11C side of the second space S2.

The object conveyance section K2 is a section on the object discharging port 11B side than the conveyance acceleration section K1. Space S3 in the object conveyance section K2 communicates with the object discharging port 11B and the first space S1 of the conveyance acceleration section K1. Because the space S3 is shielded by the first partition wall part 18, which will be described below, in a region other than the gap H and the openings 14H and 16H, the space S3 is isolated from the second space S2 in the conveyance acceleration section K1. In the present embodiment, the object conveyance section K2 is a single screw section in which the second screw blade 16 is provided but the first screw blade 14 is not provided. However, for example, when the end part 14B of the first screw blade 14 and the end part 16B of the second screw blade 16 are provided on the same position, the object conveyance section K2 will be a section in which neither the first screw blade 14 nor the second screw blade 16 is provided.

The separated liquid conveyance section K3 is a section on the separated liquid discharging port 11C side than the conveyance acceleration section K1. Space S4 in the separated liquid conveyance section K3 communicates with the separated liquid discharging port 11C and the second space S2 of the conveyance acceleration section K1. Because the space S4 is shielded by the second partition wall part 20, which will be described below, in a region other than the gap H and the openings 14H and 16H, the space S4 is isolated from the first space S1 in the conveyance acceleration section K1. In the present embodiment, the separated liquid conveyance section K3 is a single screw section in which the second screw blade 16 is provided but the first screw blade 14 is not provided. However, for example, when the end part 14B of the first screw blade 14 and the end part 16B of the second screw blade 16 are provided on the same position, the separated liquid conveyance section K3 will be a section in which neither the first screw blade 14 nor the second screw blade 16 is provided.

The first partition wall part 18 is a wall-like member provided across the first screw blade 14 and the second screw blade 16 adjacent to the first screw blade 14 in the extending direction E. The first partition wall part 18 is provided on the end part 16B of the second screw blade 16. The first partition wall part 18 is provided so as to separate the second space S2 and the space S3, and shields the second space S2 from the space S3 in the object conveyance section K2. However, the first partition wall part 18 is not a necessary component, and may be omitted.

The second partition wall part 20 is a wall-like member provided across the first screw blade 14 and the second screw blade 16 adjacent to the first screw blade 14 in the extending direction E. The second partition wall part 20 is provided on the end part 16C of the second screw blade 16. The second partition wall part 20 is provided so as to separate the first space S1 and the space S4, and shields the first space S1 from the space S4 in the separated liquid conveyance section K3. However, the second partition wall part 20 is not a necessary component, and may be omitted.

The cover part 22 is provided in a region overlapping with the object feeding port 11A, between the first screw blade 14 and the second screw blade 16 that form the second space S2. The cover part 22 can suppress the pre-object A0 from the object feeding port 11A from being fed into the second space S2, by covering the outer periphery of the second space S2 in a section overlapping with the object feeding port 11A. However, the cover part 22 is not an essential component. For example, if the object feeding port 11A is provided on a position not overlapping with the second space S2, it is possible to suppress the pre-object A0 from being fed into the second space S2, and thus the cover part 22 will not be required.

The feeding unit 24 is a device connected to the object feeding port 11A and that controls the feeding amount of the pre-object A0 into the casing 10. For example, the feeding unit 24 is an opening/closing valve, a pump that conveys the pre-object A0, or the like.

The discharge pump 26 is a pump connected to the object discharging port 11B. When the discharge pump 26 is stopped, the concentrated object A transferred to the end part 10B of the casing 10 is blocked. Moreover, when the discharge pump 26 is being driven, the discharge pump 26 sucks a discharge pipe 24A, and the concentrated object A in the casing 10 is forcibly discharged from the object discharging port 11B. However, the discharge pump 26 is not an essential component, and for example, the concentrated object A may be discharged by gravity.

The inclination adjusting unit 28 is fixed to the casing 10, and changes the inclination angle of the casing 10. However, the inclination adjusting unit 28 is not an essential component, and the inclination angle may be constant.

The control unit 29 is a control device that controls the operation of the separation device 1. The control unit 29 controls at least one of the rotation of the screw shaft 12 by the motor, the feeding amount of the pre-object A0 by the feeding unit 24, the operation of the discharge pump 26, which is the discharge amount of the concentrated object A in the casing 10, and the inclination angle by the inclination adjusting unit 28. For example, the control unit 29 is a computer including an arithmetic device, that is, a central processing unit (CPU), and controls the operation of the separation device 1 by the calculation of the CPU.

### Operation of Separation Device

Next, an operation of the separation device 1 formed as described above, and behavior of an object will be described. As illustrated in FIG. 1, the control unit 29 controls the feeding unit 24, and feeds the pre-object A0 into the casing 10 from the object feeding port 11A. Because the position of the object feeding port 11A is overlapped with the conveyance acceleration section K1, the pre-object A0 from the object feeding port 11A is fed into the first space S1 in the conveyance acceleration section K1. The control unit 29 rotates the screw shaft 12. The pre-object A0 fed into the first space S1 is transferred to the object discharging port 11B side, by gravity and by being pressed by the first surface 16a of the second screw blade 16, while the liquid component is separated. The solid component of the pre-object A0 in the first space S1 flows through the first space S1 into the space S3 that communicates with the first space S1, while the solid component is suppressed from flowing into the second space S2, because the solid component cannot easily pass through the gap H and the openings 14H and 16H. Then, the solid component of the pre-object A0 that has flowed into the space S3 is discharged to the outside of the casing 10 from the object discharging port 11B as the concentrated object A, from which the liquid component is separated, by the discharge pump 26 driven by the control unit 29. The solid component of the pre-object A0 in the first space S1 is accumulated on the object discharging port 11B side of the first space S1, but is blocked from entering the space S4, by the second partition wall part 20 that isolates between the first space S1 and the space S4.

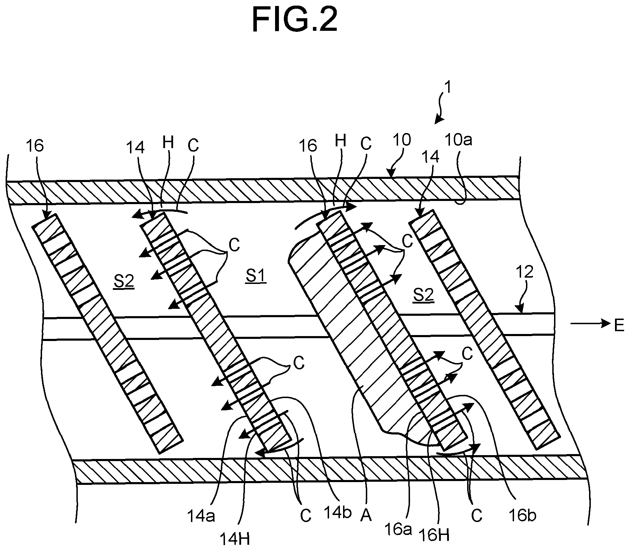

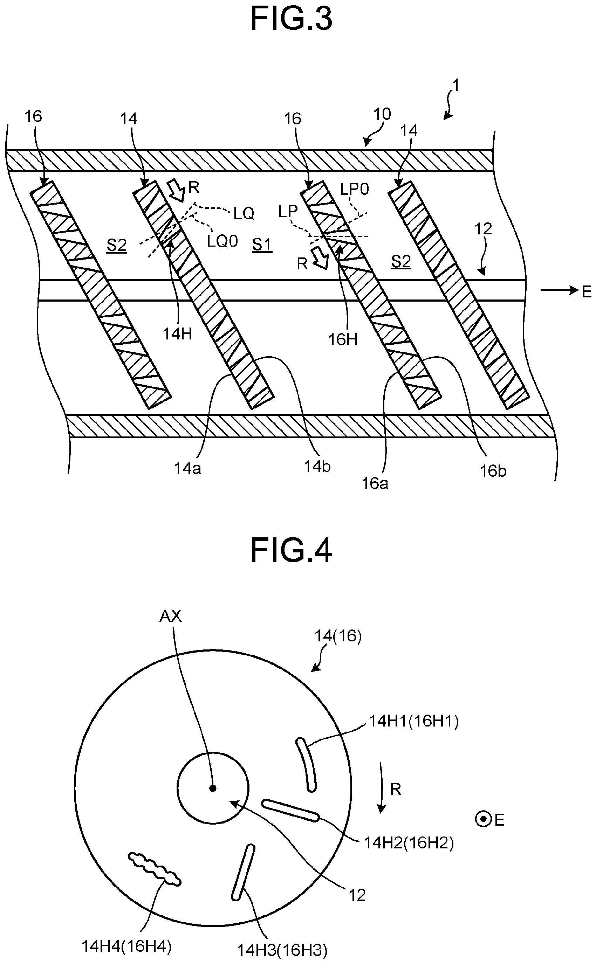

FIG. 2 is a schematic sectional view of a screw blade according to the first embodiment. As illustrated in FIG. 2, the separated liquid C separated from the pre-object A0 in the first space S1 flows into the second space S2 through the gap H, and also flows into the second space S2 through the opening 14H on the first screw blade 14 and the opening 16H on the second screw blade 16. In the first space S1, because the solid component of the pre-object A0 (concentrated object A) is pressed by the first surface 16a of the second screw blade 16, the solid component is accumulated on the first surface 16a side. On the other hand, in the first space S1, the separated liquid C is separated from the solid component of the pre-object A0 on the second surface 14b side. Therefore, the separated liquid C flows into the second space S2 on the object discharging port 11B side, through the openings 14H formed on the second surface 14b. Because the second surface 14b is on the side opposite to the side where the solid components are accumulated, there are less solid components in the vicinity of the openings 14H. Therefore, by providing the openings 14H in the first space S1, it is possible to appropriately discharge the separated liquid C into the second space S2, while suppressing the outflow of solid components. The separated liquid C from the solid components of the pre-object A0 accumulated on the first surface 16a also oozes out to the first surface 16a side. As illustrated in FIG. 3, the separated liquid C oozed out to the first surface 16a side flows into the second space S2 on the separated liquid discharging port 11C side, through the openings 16H formed on the first surface 16a. In this manner, by providing the openings 16H on the first surface 16a where the solid components are accumulated, it is possible to appropriately discharge the separated liquid C that has oozed out on the first surface 16a side into the second space S2, without returning the separated liquid C to the solid components.

### Formation of Openings

In this manner, in the first space S1, the solid components tend to accumulate on the side of the second screw blade 16 that presses the pre-object A0, and the solid components tend not to accumulate on the first screw blade 14 side. In the present embodiment, in view of this tendency, the opening 14H on the first screw blade 14 and the opening 16H on the second screw blade 16 are designed with different concepts. Specifically, in the first screw blade 14, because the solid components are less likely to accumulate and the risk of outflow of solid components is smaller than those of the second screw blade 16, for the opening 14H, more emphasis is placed on increasing the outflow rate of the separated liquid C than suppressing the outflow of solid components. On the other hand, in the second screw blade 16, because the solid components are likely to accumulate and the risk of outflow of solid components is higher than those of the first screw blade 14, for the opening 16H, more emphasis is placed on suppressing the outflow of solid components than increasing the outflow rate of the separated liquid C. The opening 14H on the first screw blade 14 and the opening 16H on the second screw blade 16 are designed such that the outflow rate of the separated liquid C from the opening and the risk of outflow of solids from the opening differ between the opening 14H and the opening 16H.

If the opening 14H on the first screw blade 14 and the opening 16H on the second screw blade 16 are designed on the basis of the outflow of the separated liquid and solids from the opening, the configurations (for example, the shape, the area, and the number) of the opening 14H and the opening 16H may be the same. If the opening 14H and the opening 16H are designed on the basis of the design concept described above, the configuration may be the same accordingly. In the present embodiment, the opening 14H and the opening 16H are both designed on the basis of the outflow of the separated liquid C and solids from the opening. However, it is not limited thereto, and at least one of the opening 14H and the opening 16H may be designed on the basis of the outflow of the separated liquid C and solids from the opening.

Hereinafter, an example of formation of the openings 14H and 16H will be described. FIG. 3 is a schematic diagram illustrating an example of openings. In the example of FIG. 3, the opening area of the opening 16H on the first surface 16a (first space S1 side) is formed smaller than that on the second surface 16b (second space S2 side). More specifically, the opening area of the opening 16H may be reduced from the second surface 16b side toward the first surface 16a side. In this manner, it is possible to suppress the outflow of solid components, by reducing the opening area on the first surface 16a on the first space S1 side, and not allowing the solid components in the first space S1 to easily enter the opening 16H. Moreover, in the example of FIG. 3, the opening 16H is inclined to the rotation direction R side of the screw shaft 12 with respect to the axis LP0 orthogonal to the surface of the second screw blade 16, from the first surface 16a side toward the second surface 16b side. That is, the center axis LP of the opening 16H is inclined to the rotation direction R side with respect to the axis LP0 from the first surface 16a side toward the second surface 16b side. Because the solid component slides relative to the opposite direction side of the rotation direction R with respect to the first surface 16a, the solid component may come into contact with the edge of the opening 16H at the side opposite to the rotation direction R. In this case, for example, if the edge that comes into contact with the solid component is at an acute angle, the solid component may be scraped off by the edge and the risk of the solid component entering the opening 16H is increased. In contrast, as illustrated in FIG. 3, by making the opening 16H inclined to the rotation direction R side, and making the edge that comes into contact with the solid component at an obtuse angle, it is possible to reduce the risk of the solid component from being scraped off.

In the example of FIG. 3, the opening area of the opening 14H on the first surface 14a (second space S2 side) is formed smaller than that on the second surface 14b (first space S1 side). More specifically, the opening area of the opening 14H is reduced from the second surface 14b side toward the first surface 14a side. Because the openings 14H are formed on a position with less solid components, the risk of outflow of solid components is smaller than that of the opening 16H, even if the opening area of the second surface 14b on the first space S1 side is enlarged. Moreover, by enlarging the opening area of the second surface 14b on the first space S1 side, it is possible to appropriately discharge the separated liquid C into the second space S2, which has a lower pressure than that of the first space S1. However, on the contrary, the opening area of the opening 14H on the second surface 14b may be formed smaller than that on the first surface 14a, and the opening area of the opening 14H may be reduced from the first surface 14a side toward the second surface 14b side. By forming the opening 14H in this manner, for example, it is possible to suppress the outflow of the solid components floating in the vicinity of the first surface 14a. Moreover, the opening 14H is inclined to the rotation direction R side of the screw shaft 12 with respect to the axis LQ0 orthogonal to the surface of the first screw blade 14, from the second surface 14b side toward the first surface 14a side. That is, the center axis LQ of the opening 14H is inclined to the rotation direction R side with respect to the axis LQ0 from the second surface 14b side toward the first surface 14a side. Because the floating solid component slides relative to the opposite direction side of the rotation direction R with respect to the second surface 14b, the floating solid component may come into contact with the edge of the opening 16H at the side opposite to the rotation direction R. By making the opening 14H inclined to the rotation direction R side, and making the edge that comes into contact with the solid component at an obtuse angle, it is possible to reduce the risk of the solid component from being taken into the opening 16H.

The openings 14H and 16H may have any shape in addition to that in the first embodiment and other examples described above. For example, the openings 14H and 16H may have any shape such as an oval shape, a triangular shape, a rectangular shape, a square shape, a diamond shape, a V-shape, a cross shape, a star shape, and a T-shape, in addition to a circular shape. For example, to enlarge the opening area of the openings 14H and 16H, a shape with corners such as a polygon is more preferable than a shape without corners such as a circular shape and an oval shape. In the case of a shape with corners, it is possible to enlarge the opening area while keeping the inscribed circle of the opening small. For example, it is possible to suppress the outflow of solid components by receiving the solid components at a portion where the opening width is small, while increasing the outflow rate of the separated liquid C by enlarging the opening area. On the other hand, when the cleaning efficiency is taken into account, a shape without corners such as a circular shape and an oval shape is preferable than a shape with corners such as a polygon, to prevent clogging. Moreover, to increase the number of the openings 14H and 16H, a shape without corners such as a circular shape and an oval shape is preferable than a shape with corners such as a polygon, from the viewpoint of strength of a portion between the openings. Furthermore, all of the openings 14H and 16H may not have the same shape, and the openings 14H and the openings 16H may have different shapes from each other.

FIG. 4 is a schematic diagram illustrating another example of openings. As illustrated in FIG. 4, the openings 14H and 16H may also have a slit shape. For example, as openings 14H1 and 16H1, the openings may have a slit shape in the rotation direction R, or as openings 14H2 and 16H2, the openings may have a slit shape in the radial direction around the center axis AX in the extending direction E, or as openings 14H3 and 16H3, the openings may have a slit shape in a direction intersecting the radial direction or the rotation direction R. Moreover, as openings 14H4 and 16H4, the openings may be formed such that the width of the slit is different in each extending direction. In FIG. 4, for the convenience of explanation, a single first screw blade 14 or a second screw blade 16 has openings with different slit shapes. However, it is not limited thereto, and the openings may have the same slit shape.

Moreover, the arrangement of the openings 14H on the surface of the first screw blade 14 and the arrangement of the openings 16H on the surface of the second screw blade 16 may also be optional. For example, the openings 14H and 16H may be arranged in a matrix or in a staggered manner in the rotation direction R and the radial direction. For example, by arranging the openings in a staggered manner, it is possible to increase the number of the openings without reducing the distance between the openings too much. Hence, it is possible to improve the discharge amount of the separated liquid C, while suppressing the strength of the screw blade from being lowered.

Moreover, the configurations of the opening 14H and the opening 16H may differ from each other. For example, in the separation device 1, it is preferable that the configurations of the opening 14H and the opening 16H differ from each other such that the opening 14H can increase the outflow rate of the separated liquid C and the opening 16H can suppress the outflow of solid components. For example, the configuration in this example indicates at least one of the shape, the area, and the number. The configurations of the opening 14H and the opening 16H may differ in any way. Hereinafter, specific examples of the configurations will be described.

For example, the opening 14H and the opening 16H may have different shapes. Moreover, for example, the opening area of one opening 14H and the opening area of one opening 16H may be different from each other. In this case, for example, it is preferable that the opening area of the opening 14H is larger than the opening area of the opening 16H. By enlarging the opening area of the opening 14H on the side with less solid components, it is possible to appropriately discharge the separated liquid C while suppressing the outflow of solid components. Moreover, for example, the total area of the region where the openings 14H are formed per unit area on the first screw blade 14 and the total area of the region where the openings 16H are formed per unit area on the second screw blade 16 may be different from each other. The openings 14H are formed on the side with less solid components and the openings 16H are formed on the side where the solid components are accumulated. Hence, it is possible to appropriately perform the solid-liquid separation, by making the total areas of the openings different from each other, according to the position where the openings 14H or the openings 16H are formed. In this case, for example, it is preferable that the total area of the region where the openings 14H are formed per unit area on the first screw blade 14 is larger than the total area of the region where the openings 16H are formed per unit area on the second screw blade 16. By enlarging the total opening area of the openings 14H on the side with a little risk of outflow of solid components, it is possible to appropriately discharge the separated liquid C while suppressing the outflow of solid components.

Moreover, the configurations of the opening 14H and the opening 16H may differ according to the position in the extending direction E. For example, in the first screw blade 14 and the second screw blade 16, at least one of the shape, the opening area, and the total area of the openings 14H and 16H may be made different between the object discharging port 11B side and the separated liquid discharging port 11C side. For example, in the second screw blade 16, the opening area of the opening 16H and the total area per unit area on the object discharging port 11B side than the object feeding port 11A may be enlarged than the opening area of the opening 16H and the total area per unit area on the separated liquid discharging port 11C side than the object feeding port 11A. Moreover, in the second screw blade 16, the opening area of the opening 16H and the total area per unit area may be enlarged toward the object discharging port 11B side. Because the solid components are compressed toward the object discharging port 11B side, the risk of outflow of solid components is reduced even if the opening area is enlarged. With what has been described above and by enlarging the opening area on the object discharging port 11B side, it is possible to appropriately discharge the separated liquid C while suppressing the outflow of solid components.

The difference between the configuration of the opening 14H on the first screw blade 14 and the configuration of the opening 16H on the second screw blade 16 is not limited to the above example, and may be optional. The separated liquid C that has flowed into the second space S2 through the openings 14H and 16H and the gap H, flows through the second space S2 toward the separated liquid discharging port 11C side with an increase in the liquid level, flows into the space S4, and is discharged to the outside of the casing 10 from the separated liquid discharging port 11C. The separated liquid C in the second space S2 is blocked from entering the space S3 by the first partition wall part 18.

As described above, the separation device 1 according to the present embodiment includes the casing 10, the screw shaft 12, the first screw blade 14, and the second screw blade 16. The casing 10 includes the object discharging port 11B that is provided on one end part 10B side and that discharges the concentrated object A having been dehydrated, and the separated liquid discharging port 11C that is provided on the other end part 10C side and that discharges the separated liquid C. The screw shaft 12 is provided inside the casing 10, and extends in the extending direction E that is a direction from the end part 10B toward the end part 10C. The first screw blade 14 extends spirally on the outer peripheral surface of the screw shaft 12. The second screw blade 16 extends spirally on the outer peripheral surface of the screw shaft 12 such that a predetermined gap is formed with respect to the first screw blade 14 in the extending direction E. At least one of the first screw blade 14 and the second screw blade 16 has an opening that penetrates from one surface to the other surface, designed on the basis of the outflow of the separated liquid C and solids from each screw blade.

The separation device 1 according to the present embodiment can improve the solid-liquid separation efficiency, because the separated liquid C in the first space S1 can be made to flow into the second space S2 through the openings 14H and 16H provided on the first screw blade 14 and the second screw blade 16. That is, in the separation device 1, because the openings 14H and 16H are also used as the outflow paths of the separated liquid C in addition to the gap H, for example, compared to when the gap H is only provided as the outflow path, it is possible to improve the solid-liquid separation efficiency by increasing the discharge amount of the separated liquid C. The outflow rate of the separated liquid C may also be increased by enlarging the gap H without providing the openings 14H and 16H. However, if the gap H is enlarged too much, the solid components may flow out with the separated liquid C. In contrast, in the separation device 1, by providing the openings 14H and 16H, it is possible to increase the discharge amount of the separated liquid C, while suppressing the risk of outflow of solid components caused by enlarging the gap H. Moreover, in the present embodiment, the openings 14H and 16H are designed on the basis of the outflow of the separated liquid C and solids. Consequently, it is possible to further increase the solid-liquid separation efficiency.

Furthermore, the opening 14H on the first screw blade 14 and the opening 16H on the second screw blade 16 are designed such that the outflow rate of the separated liquid C from the opening and the risk of outflow of solids from the opening differ between the opening 14H on the first screw blade 14 and the opening 16H on the second screw blade 16. In this manner, the separation device 1 is designed such that the outflow rate of the separated liquid C and the risk of outflow of solids differ between the opening 14H and the opening 16H, according to the functions performed by the first screw blade 14 and the second screw blade 16 in the first space S1. Therefore, with the separation device 1, it is possible to improve the separation efficiency more appropriately. For example, for the opening 14H, more emphasis is placed on increasing the outflow rate of the separated liquid C than suppressing the outflow of solid components, and for the opening 16H, more emphasis is placed on suppressing the outflow of solid components than increasing the outflow rate of the separated liquid C. Therefore, it is possible to improve the discharge efficiency of the separated liquid C in the first screw blade 14 where the solid components are less likely to accumulate, while suppressing the outflow of solid components in the second screw blade 16 where the solid components are likely to accumulate.

Still furthermore, the first space S1 that conveys the pre-object A0 is formed between the first surface 16a of the second screw blade 16 directed to one end part 10B side, and the second surface 14b of the first screw blade 14 directed to the other end part 10C side. Still furthermore, the second space S2 that conveys the separated liquid C is formed between the second surface 16b of the second screw blade 16 directed to the other end part 10C side, and the first surface 14a of the first screw blade 14 directed to the one end part 10B side. The opening 14H on the first screw blade 14 makes the separated liquid C separated from the pre-object A0 in the first space S1 to flow into the second space S2 on the end part 10B (object discharging port 11B) side, and the opening 16H on the second screw blade 16 makes the separated liquid C separated from the pre-object A0 in the first space S1 to flow into the second space S2 on the end part 10C (separated liquid discharging port 11C) side. In the separation device 1 according to the present embodiment, because the openings 14H are formed on a position with less solid components (side opposite to the side where the solid components are accumulated) in the first space S1, it is possible to appropriately make the separated liquid C to flow into the second space S2 while suppressing the outflow of solid components. Moreover, because the openings 16H are provided on the side where the solid components are accumulated in the first space S1, it is possible to appropriately discharge the separated liquid C that has oozed out from the solid components, without returning the separated liquid C to the solid components.

Furthermore, the opening area of the opening 16H on the second screw blade 16 may be reduced from the second surface 16b side toward the first surface 16a side. In the separation device 1 according to the present embodiment, it is possible to suppress the outflow of solid components, by reducing the opening area of the opening 16H toward the first surface 16a side, and not allowing the solid components in the first space S1 to easily enter the opening 16H.

Moreover, the opening 16H on the second screw blade 16 may be inclined to the rotation direction R side of the screw shaft 12 with respect to the axis LP0 orthogonal to the surface of the second screw blade 16, from the first surface 16a side toward the second surface 16b side. In the separation device 1 according to the present embodiment, by making the opening 16H inclined to the rotation direction R side, and making the edge that comes into contact with the solid component at an obtuse angle, it is possible to reduce the risk of the solid component from being scraped off.

Moreover, the opening area of the opening 14H on the first screw blade 14 may be reduced from the second surface 14b side toward the first surface 14a side. In the separation device 1 according to the present embodiment, it is possible to appropriately discharge the separated liquid C while suppressing the risk of outflow of solid components, by enlarging the opening area of the opening 14H on the second surface 14b side at a position with less solid components.

Moreover, the opening area of the opening 14H on the first screw blade 14 may be reduced from the first surface 14a side toward the second surface 14b side. In the separation device 1 according to the present embodiment, for example, it is possible to suppress the outflow of the solid components floating in the vicinity of the first surface 14a, by reducing the opening area of the opening 14H on the second surface 14b side of the first space S1 side.

Moreover, the total area of the region where the openings 14H are formed per unit area on the first screw blade 14 and the total area of the region where the openings 16H are formed per unit area on the second screw blade 16 are different from each other. In the separation device 1 according to the present embodiment, it is possible to appropriately perform the solid-liquid separation, by making the total areas of the openings 14H and the openings 16H, which are formed on different positions, different from each other.

### Second Embodiment

Next, a second embodiment will be described. A separation device 1a according to the second embodiment differs from the first embodiment in that an opening is not formed on the second screw blade 16. In the second embodiment, description of the same structure as that of the first embodiment will be omitted.

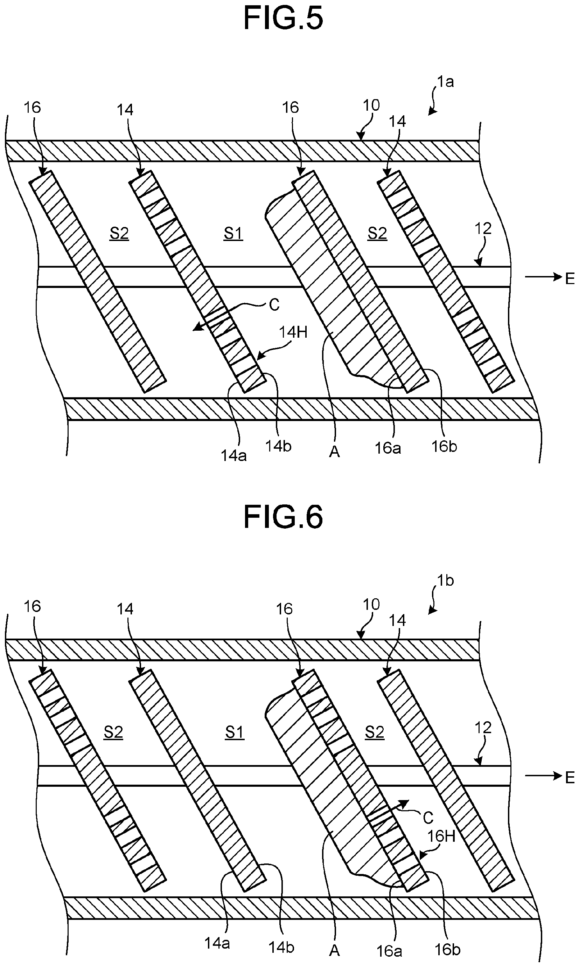

FIG. 5 is a schematic sectional view of a screw blade according to the second embodiment. As illustrated in FIG. 5, similar to the first embodiment, the first screw blade 14 of the separation device 1a according to the second embodiment has the opening 14H. On the other hand, the second screw blade 16 of the separation device 1a according to the second embodiment does not have an opening. That is, in the second embodiment, between the first screw blade 14 and the second screw blade 16, only the first screw blade 14 has openings.

With the separation device 1a according to the second embodiment, because the openings 14H are formed on a position with less solid components (side opposite to the side where the solid components are accumulated), it is possible to appropriately make the separated liquid C to flow into the second space S2 while suppressing the outflow of solid components. Moreover, by not providing an opening on the first surface 16a side of the second screw blade 16 where the solid components are accumulated, it is possible to more appropriately suppress the outflow of solid components, although the discharge amount of the separated liquid that has oozed out from the solid components is reduced than that of the first embodiment.

### Third Embodiment

Next, a third embodiment will be described. A separation device 1b according to the third embodiment differs from the first embodiment in that an opening is not formed on the first screw blade 14. In the third embodiment, description of the same structure as that of the first embodiment will be omitted.

FIG. 6 is a schematic sectional view of a screw blade according to the third embodiment. As illustrated in FIG. 6, similar to the first embodiment, the second screw blade 16 of the separation device 1b according to the third embodiment has the opening 16H. On the other hand, the first screw blade 14 of the separation device 1b according to the third embodiment does not have an opening. That is, in the third embodiment, between the first screw blade 14 and the second screw blade 16, only the second screw blade 16 has openings.

With the separation device 1b according to the third embodiment, because the opening 16H is provided on the side where the solid components are accumulated, it is possible to appropriately discharge the separated liquid C that has oozed out from the solid components, without returning the separated liquid C to the solid components. Moreover, by not providing an opening on the first screw blade 14, for example, it is possible to suppress the outflow of floating solid components, although the discharge amount of the separated liquid is reduced than that of the first embodiment.

The embodiments of the present invention have been described. However, the embodiments are not limited to the content of the embodiments and the like. Moreover, the components described above include components that can be easily assumed by those skilled in the art, components that are substantially the same, and components within a so-called range of equivalents. Furthermore, the components described above can be appropriately combined. Still furthermore, various omissions, substitutions, and changes may be made on the components without departing from the spirit of the embodiments or the like described above.

### Reference Signs List

- 1: separation device

- 10: casing
- 11A: object feeding port
- 11B: object discharging port
- 11C: separated liquid discharging port
- 12: screw shaft
- 14: first screw blade
- 14a, 16a: first surface
- 14b, 16b: second surface
- 14H, 16H: opening
- 16: second screw blade
- S1: first space
- S2: second space

## Claims

1. A separation device, comprising:
a casing including an object discharging port provided on one end part side and configured to discharge an object having been dehydrated, and a separated liquid discharging port provided on another end part side and configured to discharge separated liquid;
a screw shaft provided inside the casing and extending in an extending direction that is a direction from the one end part toward the other end part;
a first screw blade extending spirally on an outer peripheral surface of the screw shaft; and
a second screw blade extending spirally on the outer peripheral surface of the screw shaft such that a predetermined gap is formed with respect to the first screw blade in the extending direction, wherein
at least one of the first screw blade and the second screw blade has an opening that penetrates from one surface to another surface, designed based on outflow of separated liquid and a solid from each screw blade.

2. The separation device according to claim 1, wherein an opening on the first screw blade and an opening on the second screw blade are designed such that an outflow rate of the separated liquid from the opening and a risk of outflow of the solid from the opening differ between the opening on the first screw blade and the opening on the second screw blade.

3. The separation device according to claim 1 or 2, wherein
a first space configured to convey the object is formed between a first surface of the second screw blade directed to the one end part side and a second surface of the first screw blade directed to the other end part side,
a second space configured to convey the separated liquid is formed between a second surface of the second screw blade directed to the other end part side and a first surface of the first screw blade directed to the one end part side, and
the opening on the first screw blade makes the separated liquid separated from the object in the first space to flow into the second space on the one end part side, and the opening on the second screw blade makes the separated liquid separated from the object in the first space to flow into the second space on the other end part side.

4. The separation device according to claim 3, wherein an opening area of the opening on the second screw blade is reduced from the second surface side toward the first surface side.

5. The separation device according to claim 3 or 4, wherein the opening on the second screw blade is inclined to a rotation direction side of the screw shaft with respect to an axis orthogonal to a surface of the second screw blade, from the first surface side toward the second surface side.

6. The separation device according to any one of claims 3 to 5, wherein an opening area of the opening on the first screw blade is reduced from the second surface side toward the first surface side.

7. The separation device according to any one of claims 3 to 5, wherein an opening area of the opening on the first screw blade is reduced from the first surface side toward the second surface side.

8. The separation device according to any one of claims 1 to 7, wherein a total area of a region where the opening is formed per unit area on the first screw blade and a total area of a region where the opening is formed per unit area on the second screw blade are different from each other.
